# EUROPEAN PATENT APPLICATION

(11) **EP 4 283 005 A1**
(43) Date of publication of application: **29.11.2023**
(21) Application number: 22758924.9
(22) Date of filing: 24.02.2022
(51) Int. Cl.: C22C 38/00, C22C 38/18, C22C 38/12, C21D 8/02

(54) **STEEL PLATE FOR HIGH-TEMPERATURE EQUIPMENT AND MANUFACTURING METHOD THEREFOR**

(30) Priority: 25.02.2021 CN 202110214798
(71) Applicant: BAOSHAN IRON & STEEL CO., LTD., Shanghai 201900 (CN)
(72) Inventor: LIU, Zili, Shanghai 201900 (CN); ZHANG, Hanqian, Shanghai 201900 (CN); DING, Jianhua, Shanghai 201900 (CN)
(74) Representative: Maiwald GmbH
(86) International application number: PCT/CN2022/077661
(87) International publication number: WO 2022/179560

(57) **Abstract**

A steel plate for high-temperature equipment. The steel plate comprises the following chemical elements in percentage by mass: 0.09% to 0.19% of C, 0.2% to 0.7% of Mn, 0.008% to 0.02% of Ti, 1.80% to 3.2% of Cr, 0.80% to 1.70% of Mo, 0.005% to 0.015% of acid soluble Al, 0.020% to 0.050% of Nb, 0.15% to 0.50% of V, 0.0005% to 0.0050% of Mg, and the balance of Fe and unavoidable impurities. Further disclosed is a manufacturing method for the steel plate for high-temperature equipment. The method comprises the following steps: (1) smelting and continuously casting molten steel to obtain a casting blank: during the smelting process, sequentially adding deoxidizers Mn, Al, Ti, and Mg/Ni-Mg alloy, and performing deoxidazation, which comprises pre-deoxidization and final deoxidazation, wherein Mn, Al and Ti are first added sequentially for pre-deoxygenation, the oxygen potential of the molten steel pre-deoxygenated being 0.0015% to 0.0085%, and the Mg/Ni-Mg alloy is then added thereto for final deoxidazation; (2) rolling the casting blank to obtain a steel plate; and (3) carrying out quenching and tempering heat treatment on the steel plate.

## Description

### TECHNICAL FIELD

The present invention relates to a steel material and a manufacturing method therefor, in particular to a steel plate for high-temperature equipment and a manufacturing method therefor.

### BACKGROUND

In energy chemical industry, it is often necessary to use high temperature pressure vessels for the production and processing of energy. In order to improve energy production efficiency, both the market and users hope that reaction vessel can withstand higher temperatures and higher pressures, which put forwards higher requirements for the manufacturing materials of high-temperature reaction vessel.

It is found that one of the main reasons for failure of high-temperature reaction vessel is that when the reaction vessel is operated at a high temperature and a high pressure for a long period of time, elements such as As, Sn, Sb, and P tend to segregate at grain boundaries, which weakens bonding forces between the grain boundaries of the steel, thereby weakening the temper embrittlement resistance of the steel, leading to equipment failure, and then causing production accidents. Among the above four elements that cause tempering brittleness of steel, P is the most harmful to promote tempering brittleness, followed by Sn, As and Sb.

Because residual elements such as Sn, As and Sb cannot be effectively removed by the existing steelmaking techniques during steelmaking and refining, the content of these elements in steel can only be limited by reducing the amount of Sn, As and Sb in steelmaking raw materials, thereby reducing the tempering brittleness of the steel caused by the residual elements, and the content of P in steel can be reduced by technical means during steelmaking and refining.

However, in the existing technologies, the reduction of the content of P in steel by steelmaking technology currently requires large economic and time costs, especially when the content of P in steel is required to be extremely low (P≤70 ppm), the economic and time costs of steelmaking process are very high.

Therefore, how to design steel a composition and production process of steel, so that even if the steel contains high P content, it can still ensure that the plate of the steel has very high temper embrittlement resistance, which has become an increasingly urgent requirement.

For example, CN103740912A published on April 23, 2014 discloses a processing method for improving the temper embrittlement resistance of a steel plate for a pressure vessel, in which by utilizing a weak water cooling heat treatment process after normalizing steel, the microstructure of the steel is a uniform lath bainite structure, and carbides are precipitated between bainite laths and the original austenite grain boundaries, thereby improving the temper embrittlement resistance of the steel plate, however, it has been found that carbides of the steel plate tends to coarsen after simulated welding, and it is not considered in this patent that the temper embrittlement resistance of the steel plate possibly deteriorates during sequent service process due to coarsening of bainite lath and aggregation and growth of carbides in a high temperature environment for a long time .

For another example, CN104805380A, published on July 29, 2015, is entitled "Low-tempering-brittleness Cr-Mo System Steel plate for High-temperature-resistant Pressure-Bearing Equipment and Preparation Method Therefor". According to the patent, the contents of As, Sn and Sb in steel are strictly controlled, while the contents of Si and Mn in steel are required to be low, and the most important thing is to minimize the content of P in steel as much as possible to ensure that the steel has lower tempering brittleness.

For a further example, CN108677094A published on October 19, 2018 is entitled "Steel Plate for Process Pipeline for Refining and Reforming Device and Production Method Therefor". According to the patent, the contents of P and Sn in steel are controlled to satisfy (P+Sn)≤0.014%, and since Sn cannot be removed during steelmaking process, control of lower Sn content in steel can only be achieved by selecting raw materials for steelmaking, while the content of P in steel is reduced by steelmaking technology.

In view of the above, it can be seen that there are mainly two methods of improving the high-temperature temper embrittlement resistance of steel in the prior art. The first method is to control the content of residual elements such as As, Sn and Sb in steel, and to reduce the content of P in steel as much as possible through steelmaking technology and appropriately reduce the contents of Si and Mn to improve the high-temperature temper embrittlement resistance of the steel; the second method is to control the alloy chemical composition of steel, such as adding elements such as W to form W carbides, and further control the phase transformation structure of the steel to form a specific structure type to improve the structural stability of the steel so as to resist against temper embrittlement process.

Based on this, different from the design idea of improving the high-temperature temper embrittlement resistance of steel in the prior art, it is expected in the present invention to obtain a steel plate for high-temperature equipment and a manufacturing method therefor, which adopts an entirely new design idea, wherein nanoscale precipitated phases serve as P traps to absorb a large amount of P in steel, thereby avoiding diffusion of P element in steel to austenite grain boundaries when steel plate is operated at a high temperature, and thereby greatly improving the low-temperature impact toughness of the steel plate.

### SUMMARY

One of the objects of the present invention is to provide a steel plate for high-temperature equipment. Through reasonable chemical composition design and optimized production process, the steel plate for high-temperature equipment can adopt nanoscale precipitated phases as P traps to absorb a large amount of P in steel, thereby avoiding diffusion of P in steel to austenite grain boundary when steel plate is operated at high temperature, and greatly improving low-temperature impact toughness of the steel plate.

The steel plate for high-temperature equipment according to the present invention is excellent in temper embrittlement resistance, which can be effectively applied in energy and chemical industry. As a manufacturing material for high-temperature reaction vessels, it has very important practical significance and a very broad application prospect.

In order to achieve the above objects, the present invention provides a steel plate for high-temperature equipment comprising the following chemical elements in percentage by mass: 0.09% to 0.19% of C, 0.2% to 0.7% of Mn, 0.008% to 0.02% of Ti, 1.80% to 3.2% of Cr, 0.80% to 1.70% of Mo, 0.005% to 0.015% of acid soluble Al, 0.020% to 0.050% of Nb, 0.15% to 0.50% of V, 0.0005% to 0.0050% of Mg, and the balance of Fe and unavoidable impurities. Preferably, the steel plate for high-temperature equipment comprises the following chemical elements in percentage by mass:
0.09% to 0.19% of C, 0.2% to 0.7% of Mn, 0.008% to 0.02% of Ti, 1.80% to 3.2% of Cr, 0.80% to 1.70% of Mo, 0.005% to 0.015% of acid soluble Al, 0.020% to 0.050% of Nb, 0.15% to 0.50% of V, 0.0005% to 0.0050% of Mg, and the balance of Fe and unavoidable impurities; wherein the steel plate for high-temperature equipment contains nanoscale Mg-containing inclusions with dispersed distribution.

In the present application, the term "nanoscale" is used to denote a length greater than or equal to 1 nm, but less than 1000 nm (i.e., 1 µm).

In the present invention, the steel plate for high-temperature equipment according to the present invention can generate a large number of nanoscale Mg-containing inclusions with dispersed distribution through reasonable chemical composition design and optimized production process, these nanoscale inclusions can act as nucleation particles to induce a large number of precipitation of nanoscale MC precipitated phases (M represents one or more of Nb, V, Mo and Cr) in steel during working process of high-temperature equipment made from the steel plate, while the nanoscale MC precipitated phases can act as P traps to absorb a large amount of P in steel, thereby avoiding significant segregation of P in steel towards austenite grain boundaries when the steel plate works at a high temperature, and greatly increasing the temper embrittlement resistance of the steel plate.

In the steel plate for high-temperature equipment according to the present invention, the design principle of each chemical element is specifically as follows:
C: in the steel plate for high-temperature equipment according to the present invention, C is an important element in steel. In order to ensure the adaptability of the steel plate to welding process, the content of C in steel should not be too high, and the upper limit of the content of C is controlled to be 0.19%. When the content of C in steel is higher than 0.19%, the low-temperature impact toughness of steel plate substrate after welding and the heat-affected zone in welding will be deteriorated. Accordingly, in order to ensure proper strength of the steel plate, it is necessary to control the mass percentage of C in steel to be greater than or equal to 0.09%. Based on this, in the steel plate for high-temperature equipment according to the present invention, the mass percentage of C is controlled to be between 0.09% and 0.19%.

Mn: in the steel plate for high-temperature equipment according to the present invention, Mn is a weak deoxidizing element, and the oxygen potential in steel can be adjusted by taking Mn as a deoxidizer. In addition, Mn is also a strengthening element, and can effectively improve the strength of steel, so that in order to ensure the strength of the steel, the lower limit value of Mn is 0.2%. In addition, Mn is also an element which tends to segregate in steel. If the content of Mn in steel is high, the central segregation of the steel plate will be aggravated, thereby lowering the low-temperature impact toughness of the steel plate, and thus the upper limit of the content of Mn is limited to 0.7%. Based on this, in the steel plate for high-temperature equipment according to the present invention, the mass percentage of Mn is controlled to be between 0.2% and 0.7%.

Ti: in the steel plate for high-temperature equipment according to the present invention, Ti is also a deoxidizing element, and the deoxidizing ability of Ti is superior to Mn but weaker than Al and Mg. In the present invention, Ti can be appropriately added to steel according to deoxidization effect of Mn to control the oxygen potential in steel. Meanwhile, Ti₂O₃ particles can be formed after Ti deoxidization to promote the generation of intragranular ferrite and improve the low-temperature impact toughness of the steel. However, it should be noted that the content of Ti in steel should not be too high, and when the content of Ti in steel is too high, the size of the Ti₂O₃ particles formed becomes larger, and therefore no longer has the ability to form intragranular ferrite, but will easily become a source of crack initiation and reduce the low-temperature impact toughness of the steel. The upper limit of Ti is thus 0.02%. Based on this, in the steel plate for high-temperature equipment according to the present invention, the mass percentage of Ti is controlled to be between 0.008% and 0.02%.

Cr: in the steel plate for high-temperature equipment according to the present invention, adding an appropriate amount of Cr can improve the hardenability of the steel plate and improve the oxidation resistance and corrosion resistance of the steel plate when working at high temperature. Based on this, in the steel plate for high-temperature equipment according to the present invention, the mass percentage of Cr is controlled to be between 1.80% and 3.2%.

Mo: in the steel plate for high-temperature equipment according to the present invention, Mo can be compounded and solidly dissolving with interstitial elements such as carbon and nitrogen to improve the high-temperature creep strength of the steel plate. Adding an appropriate amount of Mo can also form small precipitated phases, achieving precipitation strengthening effect. When the content of Mo in steel is higher, the precipitated phases tend to coarsen and their size increase, so that the precipitation strengthening effect is weakened. Based on this, in the steel plate for high-temperature equipment according to the present invention, the mass percentage of Mo is controlled to be between 0.80% and 1.70%.

Acid soluble Al: in the steel plate for high-temperature equipment according to the present invention, it is necessary to strictly control the mass percentage of acid soluble Al in steel. When the content of acid soluble aluminum in steel is less than 0.005%, the steel tends to generate mixed crystal phenomenon during rolling and phase transformation, which reduces the structural uniformity of the steel plate, and thus reduces the impact toughness of the steel; accordingly, the content of acid soluble aluminum in steel should not be too high, and when the content of acid soluble aluminum in steel is higher than 0.015%, magnesia-alumina spinel inclusions are easy to be formed in the steel, which not only impairs the mechanical properties of the steel plate, but also disadvantageous to controlling formation of Mg-containing inclusions in the steel. Therefore, in the steel plate for high-temperature equipment according to the present invention, the mass percentage of acid soluble Al is controlled to be between 0.005% and 0.015%.

Nb: in the steel plate for high-temperature equipment according to the present invention, Nb can play a role in refining the structure of steel and improving the strength and toughness of steel. However, it should be noted that the content of Nb in steel should not be too high. When the content of Nb in steel is too high, the toughness of heat-affected zone in welding will be reduced. Therefore, in the steel plate for high-temperature equipment according to the present invention, the mass percentage of Nb is controlled to be between 0.020% and 0.050%.

V: in the steel plate for high-temperature equipment according to the present invention, an appropriate amount of V can be added for bonding with C in steel to generate nanoscale VC precipitated phases, thereby obtaining a precipitation strengthening effect; when an excessive amount of V is added, excessive V will be solidly dissolved in ferritic matrix, thereby weakening bonding forces between atoms. Based on this, in the steel plate for high-temperature equipment according to the present invention, the mass percentage of V is controlled to be between 0.15% and 0.50%.

Mg: in the steel plate for high-temperature equipment according to the present invention, Mg has a very strong deoxidizing ability. After adding Mg in molten steel, a large amount of Mg-containing inclusions can be formed, and these Mg-containing inclusions will greatly reduce the activity of [O] in steel, so that the amount of larger-sized Al₂O₃ and/or Ti₂O₃ inclusions in the steel will be greatly reduced. These large-sized inclusions can easily serve as a source of crack initiation and can reduce the low-temperature impact toughness of the steel plate. Therefore, by adding a small amount of Mg to steel, formation of large-sized inclusions can be reduced and the low-temperature impact toughness of the steel can be improved. In addition, the nano-Mg-containing inclusions formed can induce a large number of nanoscale MC precipitated phases that absorb P during subsequent high-temperature heat treatment and service of the steel, thereby reducing the rate and the concentration of the diffusion of P to austenite grain boundaries, thereby increasing the temper embrittlement resistance of the steel. Based on this, in the steel plate for high-temperature equipment according to the present invention, the mass percentage of Mg is controlled to be between 0.0005% and 0.0050%.

In addition, the reason for controlling the mass percentage of Mg in the molten steel to be between 0.0005% and 0.0050% is that when the mass percentage of Mg added into the molten steel is less than 0.0005%, the density of Mg-containing inclusions formed in the molten steel is too low to induce a large amount of MC precipitated phases, and on the other hand, when the mass percentage of Mg added into the molten steel is greater than 0.0050%, it is necessary to add a large amount of Mg/Ni-Mg alloy, which increases the production cost of the steel, and the addition efficiency of Mg is lowered because the total content of Mg in the molten steel is already close to its saturation concentration.

Preferably, the steel plate for high-temperature equipment according to the present invention further comprises at least one of the following chemical elements: 0<Ca≤0.0050%, 0<Ni≤0.6%, 0<B≤0.0015%, and 0<Cu≤0.5%.

In the above technical solution of the present invention, Ca, Ni, B and Cu all can further improve the properties of the steel plate for high-temperature equipment according to the present invention.

Ca: in the steel plate for high-temperature equipment according to the present invention, Ca is liable to bond with O and S in steel to form calcium oxide and calcium sulfide inclusions. When the content of Ca in steel is high, exceeding 0.005%, large-sized calcium oxide and calcium sulfide inclusions are easy to be formed in the steel, which is not good for the properties of the steel. Therefore, in the steel plate for high-temperature equipment according to the present invention, the mass percentage of Ca is preferably controlled to 0<Ca≤0.0050%.

Ni: in the steel plate for high-temperature equipment according to the present invention, Ni can effectively improve the low-temperature toughness and strength of the steel plate, but it should be noted that the price of Ni is high, and considering the production cost of steel, it is not appropriate to add excessive Ni to steel. Therefore, in the steel plate for high temperature equipment according to the present invention, the mass percentage of Ni is preferably controlled to 0<Ni≤0.6%.

B: in the steel plate for high-temperature equipment according to the present invention, B can bond with N to form BN, thereby reducing the content of N solidly dissolved in steel and improving the low-temperature toughness of the steel. However, it should be noted that it is not appropriate to add excessive B since excessive B tends to significantly segregate at grain boundaries, which is detrimental to the properties of the steel. Therefore, in the steel plate for high-temperature equipment according to the present invention, the mass percentage of B is preferably controlled to 0<B≤0.0015%.

Cu: in the steel plate for high-temperature equipment according to the present invention, Cu can increase the strength of steel and improve the corrosion resistance of the steel, but when the content of Cu in steel is too high, high-temperature brittleness is easily generated at a high temperature. Therefore, in the steel plate for high temperature equipment according to the present invention, the mass percentage of Cu is preferably controlled to 0<Cu≤0.5%.

It should be noted that the addition of the above elements Ca, Ni, B and Cu will increase the cost of the raw material. Considering performance and cost control comprehensively, at least one of the above elements is preferably added in the technical solution of the present invention.

It is preferable in the steel plate for high-temperature equipment according to the present invention, among the unavoidable impurities, P≤0.016%, S≤0.010%, N≤0.004%, and O≤0.005%.

In the above technical solution, P, S, N and O are all impurity elements in steel, and in order to obtain a steel with better properties and better quality, the content of the impurity elements in steel should be reduced as much as possible if technically possible.

P: when the content of P in steel is too high, the toughness of the steel will become worse. P can segregate at grain boundaries, resulting in weakening of bonding forces between grain boundaries, which is the main reason for temper brittleness generated in a steel plate. In addition, similar to Mn, P is also an element that tends to segregate, and segregation of P will reduce the structural homogeneity of the steel plate and eventually lead to unevenness in the properties of the steel. Therefore, in the steel plate for high-temperature equipment according to the present invention, the mass percentage of P is controlled to P≤0.016%.

S: when the content of S in steel is too high, central segregation of slab will be caused, and S can bond with Mn to form large MnS inclusions, which will reduce the strength and toughness of steel plate. Therefore, in the steel plate for high-temperature equipment according to the present invention, the mass percentage of S is controlled to S≤0.010%.

N: when content of N in steel is too high, the toughness of the steel will be adversely affected, especially when the content of solidly dissolved N exceeds 0.004%, solidly dissolved N will decrease the low-temperature toughness of steel plate. Therefore, in the steel plate for high-temperature equipment according to the present invention, the mass percentage of N is controlled to N≤0.004%.

O: when the content of O in steel is too high, adverse effects will also be brought to the steel. Therefore, in the steel plate for high-temperature equipment according to the present invention, the mass percentage of O is controlled to O≤0.005%.

Preferably, in the steel plate for high-temperature equipment according to the present invention, the bulk density of Mg-containing inclusions having a size of less than 800 nm is greater than 6×10⁶/mm³.

Preferably, in the steel plate for high-temperature equipment according to the present invention, the steel plate further contains nanoscale MC precipitated phases, wherein M represents one or more of Nb, V, Mo and Cr, the MC precipitated phases are spherical or near-spherical, and the MC precipitated phases have an average particle size of less than 200 nm. In the present application, the average particle size refers to the average particle size of all MC precipitates in the precipitated phases.

Preferably, in the steel plate for high-temperature equipment according to the present invention, the bulk density of the MC precipitated phases having a size of less than 500 nm is greater than 3.0x 10⁶/mm³.

Preferably, in the steel plate for high-temperature equipment according to the present invention, the proportion of MC precipitated phases having a size of less than 100 nm in all MC precipitated phases is greater than 50%. In the present application, the proportion refers to the number proportion of the MC precipitated phases, i.e., the proportion of the number of the MC precipitated phases having a size of less than 100 nm in the total number of all MC precipitated phases.

In the present application, the "bulk density" in terms of Mg inclusions and MC precipitated phases is measured according to the method described in YB/T 5320-2006.

In the present application, the "size" in terms of Mg inclusions and MC precipitated phases refers to the size of a single Mg inclusion or MC precipitated phase, and specifically refers to the length of the longest line segment, such as the diameter (for spherical or near-spherical substance) or the length of the major axis (for ellipsoidal or near-ellipsoidal substance), through the center of the inclusion or precipitated phase.

Preferably, in the steel plate for high-temperature equipment according to the present invention, the thickness of the steel plate is ≥5 mm.

Preferably, in the steel plate for high-temperature equipment according to the present invention, the steel plate has a temper embrittlement resistance Tₜᵣ lower than or equal to -60 °C.

Accordingly, a further object of the present invention is to provide a manufacturing method for a steel plate for high-temperature equipment, the manufacturing method is simple, and the manufactured steel plate for high-temperature equipment is excellent in temper embrittlement resistance, can be effectively applied in energy and chemical industry as a manufacturing material for a high-temperature reaction vessel, and has very important practical significance and a very broad application prospect.

In order to achieve the above object, the present invention provides a manufacturing method for the steel plate for high-temperature equipment as described above, which comprises the following steps:
(1) smelting and continuously casting molten steel to obtain a casting blank: during the smelting, adding deoxidizers Mn, Al, Ti, and Mg/Ni-Mg alloy sequentially into the molten steel, and performing deoxidization, which comprises pre-deoxidization and final deoxidization, wherein Mn, Al and Ti are first added sequentially for pre-deoxidization, the oxygen potential of the pre-deoxidized molten steel being 0.0015% to 0.0085%, and the Mg/Ni-Mg alloy is then added for final deoxidization;
(2) rolling the casting blank to obtain a steel plate; and
(3) carrying out quenching and tempering heat treatment on the steel plate.

In the above technical solution of the present invention, a large amount of uniformly dispersed nanoscale Mg-containing inclusions need to be generated in the steel plate for high-temperature equipment according to the present invention, these nanoscale Mg-containing inclusions can serve as nucleation cores in subsequent heat treatment processes to induce a large amount of MC precipitated phases to precipitate in steel, and these MC precipitated phases can absorb P in the steel, thereby reducing the phenomenon of significant segregation of P towards grain boundaries in the steel plate, thereby improving the temper embrittlement resistance of the steel plate.

In order to form a large number of Mg-containing inclusions with dispersed distribution in the steel plate of the present invention, it is necessary to control the oxygen potential of the molten steel during the deoxidization process, and to control the oxygen potential of the molten steel, it is necessary to select appropriate deoxidizing elements and deoxidize it in a certain addition order. Therefore, in the present invention, the process of smelting the molten steel is optimized by first adding Mn, Al and Ti as deoxidizers sequentially during the smelting process for pre-deoxidization, so that the oxygen potential of the pre-deoxidized molten steel is 0.0015% to 0.0085%, and then adding Mg/Ni-Mg alloy as a deoxidizer for final deoxidization.

Preferably, the Ni-Mg alloy is a Ni-Mg alloy wrapped with an iron sheet.

In the present application, the term "oxygen potential" refers to an oxygen content in mass percentage, which is measured according to the method for measuring oxygen content in molten steel described in ISO 14284: 1996.

It should be noted that in the above step (1) of the present invention, there are two main purposes for using the deoxidizer Mn first for pre-deoxidization: the first purpose is to reduce the concentration of free oxygen in the molten steel so as to create good oxygen potential conditions for subsequent addition of deoxidizers; and the second purpose is that after deoxidization by Mn, low melting point inclusions are formed, which tend to aggregate in the molten steel, grow, and float up to steel slag and are thus removed. In general, Al is also easy to bond with free oxygen in the molten steel to produce alumina inclusions. When the concentration of free oxygen in the molten steel is high, the size of the alumina inclusions formed are large, and due to the larger interfacial energy of the alumina inclusions, the adsorption capacity between the alumina inclusions is strong, and these alumina inclusions easily aggregate into clusters, block the outlet of casting water, or remain in the steel to form large inclusions, which leads to unqualified flaw detection of steel plates. However, if the oxygen potential in the molten steel is low when Al is added, the size of the alumina inclusions formed are small and the alumina inclusions are not easy to aggregate, and part of Al will exist in the steel in the form of acid soluble aluminum, which is advantageous for controlling phase transformation process of austenite. Next, the addition of Ti will further reduce the concentration of free oxygen in the steel, and the Ti₂O₃ inclusions formed after deoxidization are advantageous for formation of part of acicular ferrite structure during solidification and subsequent phase transformation, thereby improving the toughness of the steel plate; in addition, Ti can also bond with N in steel to form part of TiN. On the one hand, the adverse effect of solidly dissolved nitrogen on the toughness of the steel is reduced, and on the other hand, TiN can precipitate at high temperature during solidification, which plays a role in pinning the growth of austenite, and refines original austenite grains.

Accordingly, in the above step (1) of the present invention, it is necessary to use Mg for final deoxidization, and in some embodiments, the final deoxidization can be performed by using Ni-Mg alloy instead of Mg. This is because: Mg is a very active element, the boiling point of Mg is lower than the melting point of Fe, adding Mg to the molten steel alone will cause Mg to evaporate and oxidize immediately on the surface of the molten steel, that is, it is difficult to add Mg into the molten steel. Using Ni-Mg alloy instead of adding Mg alone can reduce the activity of Mg, so that Mg has a longer time in the molten steel to react with the molten steel, and reduce the loss caused by the evaporation of Mg into Mg vapor. Preferably, the addition mode of the Ni-Mg alloy is controlled. In order to ensure that Mg is finally uniformly distributed in the molten steel, the Ni-Mg alloy can be wrapped with an iron sheet (e.g., an iron sheet having a diameter of 5 mm), and rapidly added to the bottom of a ladle through a feeding device so that the Ni-Mg alloy can melt at the bottom of the ladle as much as possible, and homogenization of Mg can be accelerated by slightly stirring with argon blowing, thereby improving the deoxidization effect of Mg.

In addition, it should be noted that in the present invention, the reason for controlling the oxygen potential of the molten steel to be between 0.0015% and 0.0085% before final deoxidization with Mg is that in case where the oxygen potential in the molten steel is less than 0.0015%, the amount of Mg-containing inclusions formed after Mg is added for deoxidization in the steel is small, it is therefore difficult to induce precipitation of a large amount of MC carbides during subsequent heat treatment, and the effect of MC absorbing P in the steel is not significant; on the other hand, when the oxygen potential in the molten steel is high, exceeding 0.0085%, the size of Mg-containing inclusions formed by the reaction between added Mg and free oxygen in the steel is too large, and the ability of the inclusions to induce MC precipitates is reduced or disappears, and it is therefore difficult to use a large amount of MC precipitated phases to absorb P in the steel.

Preferably, in the manufacturing method of the present invention, in step (2), the casting blank is heated to 1120 to 1230 °C for rolling, finish rolling temperature is 930 °C or above, and total accumulative reduction is greater than 70%.

In step (2) of the manufacturing method according to the present invention, the reason for heating the casting blank to 1120 to 1230 °C for rolling is that when the heating temperature of the casting blank is less than 1120 °C, carbides and nitrides of Nb in the casting blank cannot be completely solidly dissolved, thereby reducing the pinning effect of Nb on austenite grains during rolling; on the other hand, when the heating temperature of the casting blank is higher than 1230 °C, it is easy to cause sharp growth of austenite grains and deteriorate the properties of the steel.

Accordingly, when rolling the casting blank, in order to make the steel completely recrystallize the steel during, and ensure continuous refinement of austenite, preferably, the finish rolling temperature is 930 °C or more and the total cumulative reduction of rolling is greater than 70%. By controlling the above process conditions, formation of larger-sized austenite grains in the steel can be suppressed, and the low-temperature toughness of the steel is improved.

Preferably, in the manufacturing method according to the present invention, in step (3), the temperature of the quenching is 890 to 950 °C, a quenching heat preservation time is T to 2.5T min. After heat preservation is completed, the steel plate is discharged from a furnace and cooled to room temperature by water cooling, wherein T represents the thickness of the steel plate in mm.

It should be noted that during the quenching, when quenching temperature is lower than 890 °C, it takes long time for austenite homogenization of the steel, which will reduce the efficiency of heat treatment; if the quenching temperature of the steel is higher than 950 °C, part of the austenite in the steel tends to grow and is liable to form mixed crystal structure, which is not conducive to the structural homogeneity of the steel. Correspondingly, when the heat preservation time of the steel at the quenching temperature is less than T min, the steel tends to be unable to be fully austenitize. On the other hand, when the heat preservation time of the steel exceeds 2.5T min, it will exceed the required austenitization time of the steel, which will reduce the efficiency of the quenching process.

Preferably, in the manufacturing method described in the present invention, in step (3), tempering temperature is 695 to 745 °C, and the tempering heat preservation time is 2.0T to 3.5T min, wherein T represents the thickness of the steel plate in mm.

In the above technical solution, in step (3) of the manufacturing method according to the present invention, a better implementation effect can be obtained by further optimizing the range of the tempering temperature and the heat preservation time. In the tempering process, when the tempering temperature of the steel is lower than 695 °C, a long tempering time is required for removing residual quenching stress in the steel, which will reduce tempering efficiency; on the other hand, when the tempering temperature of the steel is higher than 745 °C, the precipitated phases in the steel will undergo Ostwald coarsening and tend to aggregate and grow, which is conducive to formation of MC precipitated phases with fine dispersed distribution in the steel. Correspondingly, when the tempering heat preservation time is less than 2.0T min, quenching stress of the steel tends to be unable to be completely removed, and when the tempering heat preservation time is greater than 3.5T min, the MC precipitated phases in the steel are easy to coarsen, and the production efficiency of the tempering process will be reduced.

Compared with the prior art, the steel plate for high-temperature equipment and the manufacturing method therefor according to the present invention have the following advantages and beneficial effects:
in the present invention, the steel plate for high-temperature equipment according to the present invention has a greatly improved temper embrittlement resistance. In the present invention, chemical composition of steel is reasonably designed, production process of steel plate is optimized, and the type of the deoxidizers, the order of deoxidization and the amounts of the deoxidizers added in the steel smelting process are controlled, so that after final deoxidization by using Mg, a large number of nanoscale Mg-containing inclusions with dispersed distribution are generated in the steel, and these nanoscale inclusions can act as nucleation sites to induce significant precipitation of nanoscale MC precipitated phases in the steel during the working process of high-temperature equipment manufactured by the steel plate, while the nanoscale MC precipitated phases can act as P traps to absorb a large amount of P in the steel, thereby avoiding significant segregation of P in the steel towards austenite grain boundaries when the steel plate works at high temperature, thus greatly increasing the temper embrittlement resistance of the steel plate.

Compared with the prior art, in the present invention, a unique composition design technique and production process technique of the steel plate for high-temperature equipment are adopted, and steel grades having excellent temper embrittlement resistance can be produced. The present invention is significantly different from the prior art in structure, composition, and process design of steel plate for high-temperature equipment.

The steel plate for high-temperature equipment produced according to the present invention is excellent in temper embrittlement resistance, can be effectively applied to energy and chemical industry as a manufacturing material of a high-temperature reaction vessel, and has very important practical significance and a very broad application prospect.

Accordingly, the manufacturing method for the steel plate for high-temperature equipment according to the present invention can be used for manufacturing a medium- and high-temperature heat-resistant steel plate to improve the high-temperature temper embrittlement resistance of steel, and even if the content of P in steel is high, it can still ensure that the steel plate has very strong temper embrittlement resistance, and ensure long-term stable operation of the equipment manufactured by using such steel plate.

### BRIEF DESCRIPTION OF THE DRAWINGS

Hereinafter, the steel plate for high-temperature equipment and its manufacturing method according to the present invention will be further explained and illustrated with specific examples. However, these explanation and illustration are not intended to unduly limit the technical solution of the present invention.

### Examples 1 to 7 and Comparative Examples 1 to 3

The steel plates for high-temperature equipment of Examples 1 to 7 were all prepared by the following steps:
(1) smelting and continuous casting the chemical components shown in Table 1 to prepare a casting blank: to smelt molten steel in a 500 kg vacuum induction furnace, firstly, 400 kg of industrial pure iron was added into the induction furnace, and appropriate amounts of Cr, Mo, V and Nb alloys and an appropriate amount of CaO were further added into the induction furnace in accordance with the alloy composition ratio of steel for the steel plate, wherein CaO was added for slag formation during smelting; vacuum smelting was carried out at a minimum vacuum of about 20 Pa, and argon gas was filled for protection; during smelting, deoxidizers Mn, Al and Ti were sequentially added, upon the pure iron being completely melted, for pre-deoxidization, and according to the online monitoring result of the molten steel components, alloy addition amounts were appropriately adjusted and the oxygen potential of free oxygen in the molten steel was controlled; the oxygen potential of the molten steel was controlled to be 0.0015% to 0.0085%, and then final deoxidization was performed, wherein the final deoxidization was performed by adding Ni-Mg alloy wrapped with iron sheet through a feeding port, and the molten steel was cast into ingots, and then continuously cast into a casting blank.
(2) rolling the casting blank to obtain a steel plate: the casting blank was heated to 1120 to 1230 °C for rolling, finish rolling temperature was 930 °C or above, and total accumulative reduction was greater than 70%.
(3) carrying out quenching and tempering heat treatment on the steel plate: the steel plate was subjected to quenching treatment with a quenching temperature of 890 to 950 °C and a quenching heat preservation time of T to 2.5T min; after the heat preservation was completed, the steel plate was discharged from the furnace and cooled to room temperature by water cooling; then the steel plate was subjected to tempering treatment with a tempering temperature of 695 to 745 °C and a tempering heat preservation time of 2.0T to 3.5T min, and was further subjected to air cooling after being discharged from the furnace, wherein T represents the thickness of the steel plate in mm.

In the present invention, the chemical composition design of the steel plates for high-temperature equipment of Examples 1 to 7 and the related processes all meet the design specification requirements of the present invention.

Accordingly, the comparative steel plates of Comparative Examples 1 to 3 were manufactured using the same process steps as those in Example 1, except that the contents of Mg in the comparative steel plates of Comparative Examples 1 to 3 were less than the design range, and in the smelting and continuous casting operation of step (1) above, in Comparative Examples 1 to 3, only deoxidizers Mn, Al and Ti were added for deoxidization, but no Ni-Mg alloy was added for final deoxidization.

Table 1 lists the mass percentage of each chemical element of the steel plates for high-temperature equipment of Examples 1 to 7 and the comparative steel plates of Comparative Examples 1 to 3.

**Table 1 (wt.%, the balance being Fe and other unavoidable impurities other than P, S, N and O)**

| | Chemical Element | | | | | | | | | | | | | | | | |
|---|---|---|---|---|---|---|---|---|---|---|---|---|---|---|---|---|---|
| | C | Mn | P | S | Acid soluble Al | Ti | B | Mg | V | O | N | Cu | Ni | Nb | Cr | Mo | Ca |
| Example 1 | 0.098 | 0.56 | 0.016 | 0.001 | 0.010 | 0.009 | 0.0010 | 0.0050 | 0.16 | 0.001 | 0.004 | 0.02 | 0.03 | 0.049 | 1.80 | 0.81 | 0.0005 |
| Example 2 | 0.123 | 0.23 | 0.012 | 0.006 | 0.014 | 0.019 | 0.0009 | 0.0022 | 0.49 | 0.004 | 0.002 | 0.21 | 0.20 | 0.021 | 2.00 | 1.10 | 0.0012 |
| Example 3 | 0.153 | 0.68 | 0.010 | 0.003 | 0.005 | 0.015 | 0.0005 | 0.0038 | 0.38 | 0.005 | 0.003 | 0.15 | 0.18 | 0.038 | 2.50 | 1.20 | 0.0022 |
| Example 4 | 0.168 | 0.35 | 0.009 | 0.009 | 0.008 | 0.012 | 0.0011 | 0.0006 | 0.29 | 0.003 | 0.001 | 0.45 | 0.55 | 0.043 | 3.18 | 1.69 | 0.0050 |
| Example 5 | 0.185 | 0.43 | 0.014 | 0.007 | 0.012 | 0.017 | - | 0.0011 | 0.43 | 0.002 | 0.002 | - | - | 0.028 | 1.90 | 1.58 | - |
| Example 6 | 0.115 | 0.49 | 0.011 | 0.005 | 0.009 | 0.010 | 0.0010 | 0.0009 | 0.35 | 0.003 | 0.003 | 0.08 | 0.39 | 0.039 | 2.92 | 1.39 | 0.0020 |
| Example 7 | 0.128 | 0.33 | 0.015 | 0.008 | 0.011 | 0.013 | 0.0012 | 0.0019 | 0.41 | 0.002 | 0.001 | 0.23 | 0.26 | 0.041 | 2.62 | 0.90 | 0.0041 |
| Comparative Example 1 | 0.126 | 0.50 | 0.011 | 0.005 | 0.006 | 0.011 | 0.0010 | ***0.0001*** | 0.27 | 0.003 | 0.003 | 0.23 | 0.14 | 0.022 | 1.80 | 0.82 | 0.0010 |
| Comparative Example 2 | 0.095 | 0.58 | 0.013 | 0.004 | 0.009 | 0.016 | 0.0005 | ***0.0001*** | 0.33 | 0.002 | 0.002 | 0.13 | 0.19 | 0.040 | 2.20 | 1.20 | 0.003 |
| Comparative Example 3 | 0.143 | 0.63 | 0.010 | 0.003 | 0.006 | 0.013 | 0.0011 | ***0.0001*** | 0.39 | 0.004 | 0.002 | 0.16 | 0.16 | 0.036 | 3.20 | 1.55 | 0.0023 |

Table 2 lists specific process parameters of the steel plates for high-temperature equipment of Examples 1 to 7 and the comparative steel plates of Comparative Examples 1 to 3 in the above process steps.

**Table 2**

| | Plate thickness (mm) | Step (1) | Step (2) | | | Step (3) | | | |
|---|---|---|---|---|---|---|---|---|---|
| | | Oxygen potential of pre-deoxidized molten steel (%) | Heating temperature (°C) | Finish rolling temperature (°C) | Total accumulative reduction (%) | Quenching temperature (°C) | Quenching heat preservation time (min) | Tempering temperature (°C) | Tempering heat preservation time (min) |
| Example 1 | 5 | 0.0016 | 1120 | 940 | 98 | 925 | 11 | 695 | 15 |
| Example 2 | 20 | 0.0038 | 1180 | 950 | 93 | 900 | 30 | 722 | 59 |
| Example 3 | 10 | 0.0083 | 1225 | 960 | 97 | 920 | 15 | 720 | 30 |
| Example 4 | 60 | 0.0051 | 1200 | 955 | 80 | 940 | 80 | 731 | 125 |
| Example 5 | 40 | 0.0072 | 1150 | 935 | 87 | 950 | 95 | 708 | 120 |
| Example 6 | 70 | 0.0066 | 1160 | 955 | 77 | 910 | 70 | 745 | 210 |
| Example 7 | 80 | 0.0041 | 1230 | 930 | 78 | 930 | 90 | 713 | 271 |
| Comparative Example 1 | 5 | ***0.0133*** | 1230 | 930 | 98 | 920 | 12 | 701 | ***120*** |
| Comparative Example 2 | 40 | ***0.0118*** | 1180 | 940 | 87 | 950 | 70 | 745 | 115 |
| Comparative Example 3 | 80 | ***0.0107*** | 1120 | 950 | 73 | 910 | ***65*** | 720 | ***120*** |

The obtained steel plates for high-temperature equipment in Examples 1 to 7 and comparative steel plates of Comparative Examples 1 to 3 were sampled separately, and precipitated phases in steel were extracted from the steel by electrolytic extraction method, and the precipitated phases of different size ranges were separated by filter membranes of different particle sizes; the type, content of the precipitated phases in the steel were analyzed by XRD (X-ray diffraction) technique, and the chemical compositions of the inclusions and the precipitated phases were confirmed by combining transmission electron microscopy and EDS (energy dispersive spectrometer) techniques; the particle size distribution of the precipitated phases was detected by using a laser particle size analyzer, and the number, bulk density, type, size distribution range and average size of the MC precipitated phases (M represents one or more of Nb, V, Mo and Cr) in the steel plates of each example and each comparative example can be finally confirmed by using image analysis software. The data obtained through the final observation and analysis are listed in Tables 3-1 and 3-2.

Table 3-1 lists the number of MC precipitated phases in the steel plates for high-temperature equipment of Examples 1 to 7 and the comparative steel plates of Comparative Examples 1 to 3 (according to the context, when the number of nanoscale MC precipitated phases are too small, the P-absorption effect is not good). Table 3-2 lists the bulk density of Mg-containing inclusions having a size of less than 800 nm, the proportion of MC precipitated phases having a size of less than 100 nm in all MC precipitated phases, and the bulk density of MC precipitates having a size of less than 500 nm in the steel plates for high-temperature equipment of Examples 1 to 7 and the comparative steel plates of Comparative Examples 1 to 3.

**Table 3-1**

| | 0-100 (nm) | 100-200 (nm) | 200-300 (nm) | 300-400 (nm) | 400-500 (nm) | 500-600 (nm) | 600-700 (nm) | 700-800 (nm) |
|---|---|---|---|---|---|---|---|---|
| Example 1 | 98 | 20 | 7 | 2 | 0 | 2 | 1 | 1 |
| Example 2 | 121 | 43 | 24 | 11 | 5 | 0 | 1 | 0 |
| Example 3 | 152 | 29 | 17 | 3 | 1 | 1 | 1 | 0 |
| Example 4 | 180 | 41 | 16 | 4 | 2 | 0 | 0 | 1 |
| Example 5 | 191 | 24 | 9 | 2 | 0 | 2 | 1 | 2 |
| Example 6 | 165 | 36 | 15 | 2 | 3 | 1 | 0 | 1 |
| Example 7 | 177 | 26 | 10 | 5 | 2 | 0 | 1 | 3 |
| Comparative Example 1 | 3 | 9 | 6 | 3 | 2 | 2 | 5 | 3 |
| Comparative Example 2 | 6 | 6 | 7 | 3 | 5 | 5 | 6 | 7 |
| Comparative Example 3 | 5 | 6 | 8 | 1 | 2 | 2 | 0 | 5 |

**Table 3-2**

| | Bulk density of Mg-containing inclusions having size of less than 800 nm (/mm³) | Average particle size of MC precipitated phases (nm) | Bulk density of MC precipitated phases having size of less than 500 nm (/mm³) | Proportion of MC precipitated phases having size of less than 100 nm in all MC precipitated phases (%) |
|---|---|---|---|---|
| Example 1 | 8.2×10⁶ | 161.6 | 3.5×10⁶ | 75.38 |
| Example 2 | 9.6×10⁶ | 178.4 | 5.9×10⁶ | 59.31 |
| Example 3 | 7.6×10⁶ | 102 | 4.5×10⁶ | 75.25 |
| Example 4 | 11.5×10⁶ | 155.6 | 6.6×10⁶ | 74.38 |
| Example 5 | 15.5×10⁶ | 111.3 | 8.3×10⁶ | 83.77 |
| Example 6 | 12.3×10⁶ | 150.5 | 9.1×10⁶ | 71.57 |
| Example 7 | 13.5×10⁶ | 131.9 | 8.5×10⁶ | 80.55 |
| Comparative Example 1 | 1.1×10⁶ | 397.5 | 0.5×10⁶ | 10.71 |
| Comparative Example 2 | 2.1×10⁶ | 387.6 | 2.1×10⁶ | 15.38 |
| Comparative Example 3 | 1.6×10⁶ | 356.3 | 2.5×10⁶ | 15.61 |

Accordingly, after analyzing the microstructures of the steel plates for high-temperature equipment of Examples 1 to 7 and the comparative steel plates of Comparative Examples 1 to 3, the temper embrittlement resistance of the steel plates of Examples 1 to 7 and Comparative Examples 1 to 3 were further tested, and the temper embrittlement resistance of the steel plates of the examples and comparative examples were evaluated.

In the present invention, the obtained steel plates for high-temperature equipment of Examples 1 to 7 and comparative steel plates of Comparative Examples 1 to 3 were sampled separately, and specific temper embrittlement resistance evaluation was performed according to a step-by-step embrittlement cooling test.

When evaluating the temper embrittlement resistance of the steel plates of Examples 1 to 7 and Comparative Examples 1 to 3, the steel plates were first subjected to a simulated minimum post-weld heat treatment and then subjected to a step-by-step embrittlement cooling test.

The specific process of the simulated minimum post-weld heat treatment is as follows:
simulated Minimum Post-Weld Heat Treatment (Min. PWHT) process: when it was 400 °C or less, a sample blank was charged into a furnace, heated with the furnace (heating rate is 125 °C/h) to 705±14 °C, cooled with the furnace (cooling rate is 160 °C/h) to 400 °C after 8 hours of heat preservation, and then air cooled out of the furnace.

The specific process of the step embrittlement cooling test employed in the present invention is as follows:
at room temperature, the steel plate was sent to a heat treatment furnace; the furnace temperature was increased to 593 °C at a heating rate of 200 °C/h and kept at 693 °C for 1 hour; the furnace temperature was then lowered to 538 °C at a cooling rate of 5.6 °C/h and kept for 15 h; the furnace temperature was further lowered to 524 °C at a cooling rate of 5.6 °C/h and kept for 24 hours; the furnace temperature was then lowered to 500 °C at a cooling rate of 5.6 °C/h and kept for 60 hours; the furnace temperature was then lowered to 468 °C at a cooling rate of 2.8 °C/h and kept for 100 hours; finally, the furnace temperature was lowered to 316 °C at a cooling rate of 28 °C/h; after being discharged from the furnace, the steel plate was air cooled in still air to room temperature.

Transverse standard impact samples were taken from the steel plates having undergone simulated minimum post-weld heat treatment and the steel plates having undergone simulated minimum post-weld heat treatment and step-by-step embrittlement cooling, respectively, and impact experiments were performed at a series of temperatures of 20 °C, 0 °C, -20 °C, -40 °C, -60 °C, - 80 °C, -100 °C and -120 °C. Three impact samples were made at each experiment temperature and an average value was taken as the impact absorption energy value at this temperature.

According to the above experimental results, ductility-brittleness transition temperature curves of the steel plates having undergone simulated minimum post-weld heat treatment and the steel plates having undergone simulated minimum post-weld heat treatment and step-by-step embrittlement cooling can be plotted respectively, and the high-temperature temper embrittlement resistance of the steel plates can be judged according to the formula Tₜᵣ=vTr₆₀+3.0×△vTr₆₀. The lower the Tₜᵣ value of a steel plate, the stronger the temper embrittlement resistance of the steel plate.

It should be noted that, in the above formula Tₜᵣ=vTr₆₀+3.0×△vTr₆₀, vTr₆₀ represents the corresponding transition temperature when the impact absorption energy of a steel plate having undergone simulated minimum post-weld heat treatment is 60 J, △vTr₆₀ represents the value obtained by subtracting the corresponding transition temperature when the impact absorption energy of the steel plate having undergone simulated minimum post-weld heat treatment from the corresponding transition temperature when the impact absorption energy of the steel plate having undergone simulated minimum post-weld heat treatment and step-by-step embrittlement cooling.

Table 4 lists the test results of the steel plates for high-temperature equipment of Examples 1 to 7 and the comparative steel plates of Comparative Examples 1 to 3.

**Table 4**

| | Temper embrittlement resistance Tₜᵣ(°C) |
|---|---|
| Example 1 | -96 |
| Example 2 | -65 |
| Example 3 | -83 |
| Example 4 | -99 |
| Example 5 | -102 |
| Example 6 | -89 |
| Example 7 | -106 |
| Comparative Example 1 | 15 |
| Comparative Example 2 | 8 |
| Comparative Example 3 | 5 |

With reference to Table 3 and Table 4, it can be seen that both the steel plates for high-temperature equipment of Examples 1 to 7 and the comparative steel plates of Comparative Examples 1 to 3 contain MC precipitated phases, however, in the steel plates for high-temperature equipment of Examples 1 to 7, the bulk density of Mg-containing inclusions having a size of less than 800 nm is between 7.6×10⁶/mm³ and 15.5×10⁶/mm³, the bulk density of MC precipitated phases having a size of less than 500 nm is between 3.5×10⁶/mm³ and 9.1×10⁶/mm³, the average particle size of MC precipitated phases is between 102 nm and 178.4 nm, and the proportion of MC precipitated phases having a size of less than 100 nm in all MC precipitated phases is between 59.31% and 83.77%.

On the other hand, in the comparative steel plates of Comparative Examples 1 to 3, the average diameters of MC precipitated phases in the steel plates are greater than 200 nm, the bulk densities of MC precipitated phases having a size of less than 500 nm are all less than 3.0×10⁶/mm³, the proportions of MC precipitated phases having a size of less than 100 nm in all MC precipitates are all less than 50%, and the bulk densities of Mg-containing inclusions having a size of less than 800 nm are all less than 6×10⁶/mm³. This is because in Comparative Examples 1 to 3, only deoxidizers Mn, Al and Ti were added for deoxidization, but no Ni-Mg alloy was added for final deoxidization, resulting in lack of sufficient Mg-containing oxides in the steel that can induce nucleation of MC precipitated phases.

As shown in Table 4, in the steel plates for high-temperature equipment of Examples 1 to 7 of the present invention, the high-temperature temper brittleness indexes Tₜᵣ of the steel plates of the examples are all below -65 °C, much lower than those in the comparative examples. Thus, it can be seen that the temper brittleness resistance of the steel plates for high-temperature equipment of Examples 1 to 7 is far superior to that of the comparative steel plates of Comparative Examples 1 to 3.

In summary, it can be seen that the steel plate for high-temperature equipment according to the present invention has a greatly improved temper embrittlement resistance. In the present invention, chemical composition of steel is reasonably designed, production process of steel plate is optimized, and the type of deoxidizers, the order of deoxidization and the amounts of the deoxidizers added in the steel smelting process are controlled, so that after final deoxidization by using Mg/Ni-Mg alloy, a large number of nanoscale Mg-containing inclusions with dispersed distribution are generated in the steel, and these nanoscale inclusions can act as nucleation sites to induce significant precipitation of nanoscale MC precipitated phases in the steel during the working process of high-temperature equipment manufactured by the steel plate, while the nanoscale MC precipitated phases can act as P traps to absorb a large amount of P in the steel, thereby avoiding significant segregation of P in the steel towards austenite grain boundaries when the steel plate works at high temperature, thus greatly increasing the temper embrittlement resistance of the steel plate.
so that after final deoxidization by using Mg, a large number of nanoscale Mg-containing inclusions with dispersed distribution are generated in the steel, and these nanoscale inclusions can act as nucleation sites to induce significant precipitation of nanoscale MC precipitated phases in the steel during the working process of high-temperature equipment manufactured by the steel plate, while the nanoscale MC precipitated phases can act as P traps to absorb a large amount of P in the steel, thereby avoiding significant segregation of P in the steel towards austenite grain boundaries when the steel plate works at high temperature, thus greatly increasing the temper embrittlement resistance of the steel plate.

Furthermore, it should be noted that combinations of the technical features in the present invention is not limited to those described in the claims attached hereto or the specific examples. All the technical features in the present invention can be freely combined or put together in any way unless conflict arises between them.

It should also be noted that the examples illustrated above are only specific examples of the present invention. It is obvious that the present invention is not limited to the above examples, and similar variations or modifications which would be obvious to those skilled in the art from the disclosure of the present invention or can be easily conceived of all fall within the scope of the present invention.

## Claims

1. A steel plate for high-temperature equipment, comprising the following chemical elements in percentage by mass:
C: 0.09% to 0.19%, Mn: 0.2% to 0.7%, Ti: 0.008% to 0.02%, Cr: 1.80% to 3.2%, Mo: 0.80% to 1.70%, acid soluble Al: 0.005% to 0.015% of, Nb: 0.020% to 0.050%, V: 0.15% to 0.50%, Mg: 0.0005% to 0.0050%, and the balance being Fe and unavoidable impurities.

2. The steel plate for high-temperature equipment according to claim 1, wherein the steel sheet for high-temperature equipment comprises nanoscale Mg-containing inclusions dispersed within the steel sheet.

3. The steel plate for high-temperature equipment according to claim 1 or 2, wherein the steel plate further comprises at least one of the following chemical elements: 0<Ca≤0.0050%, 0<Ni≤0.6%, 0<B≤0.0015%, and 0<Cu≤0.5%.

4. The steel plate for high-temperature equipment according to claim 1 or 2, wherein among the unavoidable impurities, P≤0.016%, S≤0.010%, N≤0.004%, and O≤0.005%.

5. The steel plate for high-temperature equipment according to claim 1 or 2, wherein Mg-containing inclusions having a size of less than 800 nm in the steel plate have a bulk density of greater than 6×10⁶/mm³.

6. The steel plate for high-temperature equipment according to claim 1 or 2, wherein the steel plate further comprises nanoscale MC precipitated phases, wherein M represents one or more of Nb, V, Mo and Cr, and the MC precipitated phases have an average particle size of less than 200 nm.

7. The steel plate for high-temperature equipment according to claim 6, wherein MC precipitated phases having a size of less than 500 nm in the steel plate have a bulk density of greater than 3.0x 10⁶/mm³.

8. The steel plate for high-temperature equipment according to claim 6, wherein the proportion of MC precipitated phases having a size of less than 100 nm to all MC precipitated phases in the steel plate is greater than 50%.

9. The steel plate for high-temperature equipment according to claim 1 or 2, wherein the steel plate has a thickness of ≥5 mm.

10. The steel plate for high-temperature equipment according to claim 1 or 2, wherein the steel plate has a temper embrittlement resistance Tₜᵣ of ≤-60 °C.

11. A manufacturing method for the steel plate for high-temperature equipment according to any one of claims 1-10, comprising the following steps:
(1) smelting and continuously casting molten steel to obtain a casting blank: during the smelting, adding deoxidizers Mn, Al, Ti, and Mg/Ni-Mg alloy sequentially into the molten steel, and performing deoxidization on the molten steel, wherein the deoxidization comprises pre-deoxidization and final deoxidization, and wherein Mn, Al and Ti are first added sequentially for pre-deoxidization, and the Mg/Ni-Mg alloy is then added for final deoxidization, wherein an oxygen potential of the molten steel pre-deoxidized is 0.0015% to 0.0085%;
(2) rolling the casting blank to obtain a steel plate; and
(3) carrying out quenching and tempering heat treatment on the steel plate.

12. The manufacturing method according to claim 11, wherein in step (2), the casting blank is heated to 1120 to 1230 °C for rolling, wherein a finish rolling temperature is 930 °C or above, and total accumulative reduction is greater than 70%.

13. The manufacturing method according to claim 11, wherein in step (3), a quenching temperature is 890 to 950 °C, a quenching heat preservation time is T to 2.5T min, and after the heat preservation is completed, the steel plate is discharged from a furnace and cooled to room temperature by water cooling, wherein T represents the thickness of the steel plate in mm.

14. The manufacturing method according to claim 11 or 13, wherein in step (3), the quenched steel plate is tempered for a tempering heat preservation time of 2.0T to 3.5T min at a tempering temperature of 695 to 745 °C, wherein T represents the thickness of the steel plate in mm.

15. The manufacturing method according to any one of claims 11-13, wherein the Ni-Mg alloy is a Ni-Mg alloy wrapped with an iron sheet.
